(19) Europäisches Patentamt
European Patent Office
Office européen des brevets

(11) Publication number: 0 128 636 B1

(12) # EUROPEAN PATENT SPECIFICATION

(45) Date of publication of patent specification: **29.06.88**

(51) Int. Cl.4: **C 08 K 9/04,** C 08 L 75/04, C 08 G 18/66, C 08 G 18/50, C 08 G 18/08

(21) Application number: **84302114.8**

(22) Date of filing: **28.03.84**

(54) **Preparation of elastomers by reaction injection moulding.**

(30) Priority: **08.06.83 US 502382**

(43) Date of publication of application: **19.12.84 Bulletin 84/51**

(45) Publication of the grant of the patent: **29.06.88 Bulletin 88/26**

(84) Designated Contracting States: **DE FR GB IT SE**

(56) References cited:
**DE-A-2 913 958**
**GB-A-1 018 880**
**GB-A-2 083 484**
**US-A-3 227 675**

(73) Proprietor: **TEXACO DEVELOPMENT CORPORATION**
**2000 Westchester Avenue**
**White Plains New York 10650 (US)**

(72) Inventor: **Dominguez, Richard Gilbert**
**3107 Canter Lane**
**Austin Texas 78759 (US)**

(74) Representative: **Burnside, Michael et al**
**Urquhart-Dykes & Lord 91 Wimpole Street**
**London W1M 8AH (GB)**

EP 0 128 636 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention concerns the field of reaction injection moulded (RIM) elastomers.

US—A—4 254 069 and 4 272 618 concern the curing of RIM polyurethane elastomers. In these patents, a "polyol" is defined as a high molecular weight alcohol with a functionality of 2 or more, or an amine-terminated molecule containing a plurality of ether groups. These patents disclose amines, including aromatic diamines, as chain extenders, but the actual examples employed are of polyether polyurethanes using polyols (hydroxyl terminated) of high molecular weight. The chain extender, monethanolamine, was used as a crosslinker.

US—A—3 523 918 describes the use of amine chain extenders for the preparation of integral-skin foams. US—A—4 218 543 describes the use of high molecular weight polyols, certain aromatic diamines and isocyanates for the production of RIM parts, and specifically claims, as a chain extender, 1-methyl-3,5-diethyl-2,4-diaminobenzene (diethyltoluene diamine) and its isomer.

US—A—4 246 363 claims a RIM polyurethane composition derived from using at least three different polyols (including amine-terminated polyethers) having specific relationships with one another and specific reactivity and solubility parameters. Also, US—A—4 269 945 claims a process for preparing RIM polyurethanes using a relatively high molecular weight hydroxyl containing polyol, a chain extender and a polyisocyanate. The chain extender may be an aliphatic amine having at least one primary amine group.

EP—A—0 092 672, 0 093 861 and 0 093 862 relate to elastomers prepared using a high molecular weight amine-terminated polyether, a hydroxyl-terminated compound or an aromatic diamine as chain extender, and a polyisocyanate, which may be a simple polyisocyanate or a quasi prepolymer prepared by reacting a polyol with an excess of polyisocyanate, leaving unreacted isocyanate groups.

EP—A—0 081 701 describes the preparation of elastic shaped articles by a RIM process from an aromatic polyisocyanate, an aromatic diamine chain extender, and a polyether having a molecular weight between 1800 and 12000, at least 50% of whose isocyanate-reactive groups are primary or secondary amino groups.

DE—A—2 913 958 describes glass fibre-reinforced thermo-plastic polyurethanes made from polybutylene terephthalate and a polyfunctional isocyanate. Optionally a hydroxyl terminated chain extending agent may be included in the resin composition. The glass fibres are treated with an aminosilane or epoxysilane before incorporation into the polymer matrix.

US—A—3 227 675 describes the use of kaolin clay which has been modified with an organo functional silane as a filler for natural and synthetic resin compositions. The modified kaolin is suggested as a filler for cross-linked resins such as polyurethanes; particularly gums.

Modern Plastic Encyclopedia 1981—1982, pages 166 and 168, McGraw-Hill, describes various bifunctional silane coupling agents which improve the bond between certain organic polymers and mineral surfaces. References are made to the use of silane treated glass fibre in laminates using condensation and thermoplastic polymers.

In conventional RIM systems, the so-called A-component contains the isocyanate, whether it is pure isocyanate or a quasi-prepolymer, and the B-component contains the active hydrogen-containing materials, catalysts if needed, and most other additives, including reinforcing materials such as glass fibres or milled glass. Internal mould-release agents, mentioned in the patent applications above, are also added to the B-component. Internal mould release agents have, however, been found to interfere with the filler adhesion, particularly glass-polymer adhesion, resulting in an unsatisfactory composite. We have now found that, by changing the surface treatment of a filler material, to modify it with epoxide moieties, this problem can be corrected.

The invention provides a RIM process for making an elastomer article by reacting, in a closed mould, an aromatic polyisocyanate with an amine-terminated polyether having an average molecular weight of greater than 1500 and having more than 50% of its active hydrogen in the form of amine hydrogen atoms, and a chain extender, in the presence of a filler and an internal mould release agent, characterized in that the filler has been treated so that it carries epoxy moieties on its surface.

Especially preferred starting components for the process of the invention are amine-terminated polyethers, including primary and secondary amine-terminated polyether polyols of greater than 1,500 average molecular weight having a functionality from 2 to 6, preferably from 2 to 3, and an amine equivalent weight from 750 to 4,000. Mixtures of amine-terminated polyethers may be used. In a preferred embodiment, the amine-terminated polyethers have an average molecular weight of at least 2,500. These materials may be made by various methods known in the art.

The amine-terminated polyether resins useful in this invention, for example, are polyether resins made from an appropriate initiator which is reacted with lower alkylene oxides such as ethylene oxide, propylene oxide, butylene oxide or mixtures thereof; the resulting hydroxyl-terminated polyol then being aminated. When two or more oxides are used, they may be present in the product as random mixtures or as blocks of one or the other polyether. In the amination step, it is highly desirable that the terminal hydroxyl groups in the polyol be substantially all secondary hydroxyl groups, for ease of amination. Normally, the amination step does not completely replace all of the terminal hydroxyl groups, although most of these hydroxyl groups are replaced by amine groups. Therefore, the amine-terminated polyether resins useful in this invention have more than 50% of their active hydrogens in the form of amine hydrogens. If ethylene oxide

is used, it is desirable to cap the hydroxyl-terminated polyol with a small amount of higher alkylene oxide to ensure that substantially all the terminal hydroxyl groups are secondary hydroxyl groups. The polyols so prepared are then reductively aminated by prior art techniques, for example, as outlined in US—A—3 654 370.

In the practice of the present invention, a single high molecular weight amine-terminated polyether resin may be used. Also, mixtures of high molecular weight amine-terminated polyethers, such as mixtures of di- and trifunctional materials, and/or materials of different molecular weight or different chemical composition may be used.

The chain extenders useful in the process of this invention are preferably difunctional. Mixtures of difunctional and trifunctional chain extenders are also useful. Examples of useful chain extenders include diols, (e.g. ethylene glycol and 1,4-butane diol), amino alcohols, diamines or mixtures thereof.

Useful aromatic diamine chain extenders include, for example, 1-methyl-3,5-diethyl-2,4-diaminobenzene; 1-methyl-3,5-diethyl-2,6-diaminobenzene (both of these materials are also called diethyltoluene diamine or DETDA); 1,3,5-triethyl-2,6-diaminobenzene; and 3,5,3',5'-tetraethyl-4,4'-diaminodiphenylmethane. Particularly preferred aromatic diamine chain extenders include 1-methyl-3,5-diethyl-2,4-diaminobenzene, and a mixture of this compound with 1-methyl-3,5-diethyl-2,6-diaminobenzene. It is within the scope of this invention to include some aliphatic chain extender materials, as described in US—A—4 246 363 and 4 269 945.

Other chain extenders which find use in the method of this invention are low molecular weight polyoxyalkylene polyamines which contain terminal amine groups and have the formula

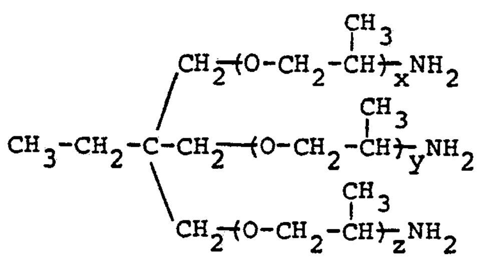

wherein x + y + z is about 5.3. The average amine hydrogen equivalent weight is about 67, and the product is commercially available from Texaco Chemical Company as JEFFAMINE T—403. Another related polyoxypropylene polyamine has the formula

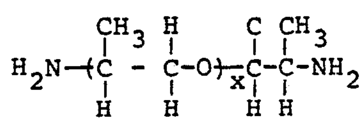

wherein x is about 5.6. This product has an average amine hydrogen equivalent weight of about 100 and is commercially available from Texaco Chemical Company as JEFFAMINE D—400. Another product having the same formula as above wherein x is about 2.6 is also useful. This product has an average amine hydrogen equivalent weight of about 57.5 and is commercially available from Texaco Chemical Company as JEFFAMINE D—230.

Other chain extenders will be apparent to those skilled in the art and the above recitation is not intended to be a limitation on the invention claimed herein.

A wide variety of aromatic polyisocyanates may be used here. Typical aromatic polyisocyanates include p-phenylene diisocyanate, polymethylene polyphenylisocyanate, 2,6-toluene diisocyanate, dianisidine diisocyanate, bitolylene diisocyanate, naphthalene-1,4-diisocyanate, bis(4-isocyanatophenyl)-methane, bis(3-methyl-3-isocyanatophenyl)methane, bis(3-methyl-4-isocyanatophenyl)methane, and 4,4'-diphenylpropane diisocyanate.

Other aromatic polyisocyanates used in the practice of the invention are methylene-bridged polyphenyl polyisocyanate mixtures which have a functionality of from 2 to 4. These latter isocyanate compounds are generally produced by the phosgenation of corresponding methylene-bridged polyphenyl polyamines, which are conventionally produced by the reaction of formaldehyde and primary aromatic amines, such as aniline, in the presence of hydrochloric acid and/or other acidic catalysts. Known processes for preparing polyamines, and for preparing corresponding methylene-bridged polyphenyl polyisocyanates therefrom, are described in the literature, and in many patents, for example, in US—A—2 683 730; 2 950 263; 3 012 008; 3 344 162 and 3 362 979.

Usually methylene-bridged polyphenyl polyisocyanate mixtures contain 20 to 100 weight % of methylene diphenyldiisocyanate isomers, with any remainder being polymethylene polyphenyl diisocyanates having higher functionalities and higher molecular weights. Typical of these are polyphenyl polyisocyanate mixtures containing 20 to 100 weight % of methylene diphenyldiisocyanate isomers, of which 20 to 95 weight % is the 4,4'-isomer, with the remainder being polymethylene polyphenyl polyisocyanates of higher molecular weight and an average functionality of from 2.1 to 3.5. These

isocyanate mixtures are known, commercially-available materials and can be prepared by the process described in US—A—3 362 979.

By far the most preferred aromatic polyisocyanate is methylene bis(4-phenylisocyanate) or MDI, in the form of pure MDI, quasi-prepolymers of MDI, modified pure MDI etc. Materials of this type may be used to prepare suitable RIM elastomers. Since pure MDI is a solid and is thus often inconvenient to use, liquid products based on MDI are often used and are included in the scope of the terms MDI or methylene bis(4-phenylisocyanate) used herein. US—A—3 394 164 discloses an example of a liquid MDI product. More generally, uretonimine-modified pure MDI is also included in the above definition. This product is made by heating pure distilled MDI in the presence of a catalyst. The liquid product is a mixture of pure MDI and modified MDI:

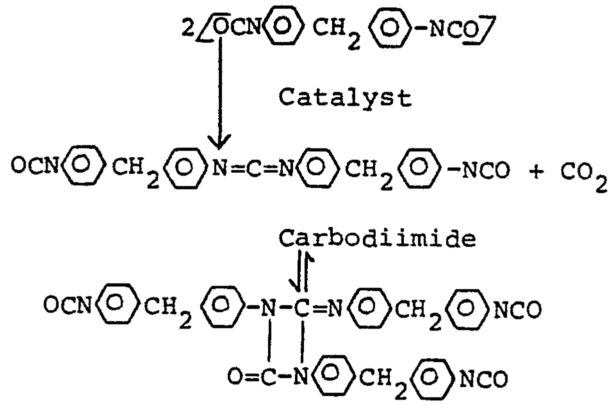


Uretonimine

Examples of commercial materials of this type are Upjohn's ISONATE 125M (pure MDI) and ISONATE 143L ("liquid" MDI). Preferably, a stoichiometric amount of isocyanate is used, based on all the ingredients in the formulation, or a greater than stoichiometric amount.

Of course, the term "polyisocyanate" also includes quasi-prepolymers of polyisocyanates with active hydrogen containing materials.

If a catalyst is needed, such conventional catalysts as tertiary amines or an organic tin compound or other polyurethane catalysts may be used. The organic tin compound may suitably be a stannous or stannic compound, such as a stannous salt of a carboxylic acid, a trialkyltin oxide, a dialkyltin dihalide or a dialkyltin oxide, wherein the organic groups of the organic portion of the tin compound are hydrocarbon groups containing from 1 to 8 carbon atoms. For example, dibutyltin dilaurate, dibutyltin diacetate, diethyltin diacetate, dihexyltin diacetate, di-2-ethylhexyltin oxide, dioctyltin dioxide, stannous octoate, stannous oleate, or a mixture thereof, may be used.

Tertiary amine catalysts include trialkylamines (e.g., trimethylamine or triethylamine), heterocyclic amines, such as N-alkylmorpholines (e.g., N-methylmorpholine, N-ethylmorpholine, or dimethyldiaminodiethylether), 1,4-dimethylpiperazine, triethylenediamine, etc., and aliphatic polyamines such as N,N,N'N'-tetramethyl-1,3-butanediamine.

Other conventional formulation ingredients may be employed as needed, for example, foam stabilizers, also known as silicone oils or emulsifiers. The foam stabilizers may be an organic silane or siloxane. For example, compounds may be used having the formula:

$$RSi[O—(R_2SiO)_n—(oxyalkylene)_mR]_3$$

wherein R is an alkyl group containing from 1 to 4 carbon atoms; n is from 4 to 8; m is from 20 to 40; and the oxyalkylene groups are derived from propylene oxide and ethylene oxide; see, for example, US—A—3 194 773.

The present invention involves the use of epoxy-modified fillers. The material employed in this modification of the filler results in compatibility between the filler material and the polymer matrix which overcomes the problems described earlier in the specification arising from lack of adhesion between polymer and filler. Any modification agent may be used that will provide on the surface of the filler an epoxy moiety which will react with the materials having Zerewitinov-active hydrogen.

Reinforcing or filler materials useful in the practice of this invention include glass-based materials such as chopped, milled or flaked glass, or mica or Wollastonite, which carry epoxy moieties on the surface. These materials are available commercially. The materials used in the following examples are designated P174J—X1 and P346—X1 from Owens-Corning Fiberglas. Modification of glass materials to contain epoxy moieties is a known procedure in the art and has been discussed in prior publications. For example, *Modern Plastics Encyclopedia*, 1977—78, copyright 1977 by McGraw-Hill, Inc., published an article entitled "Coupling Agents", by Ward Collins. In this publication, these epoxy modified materials were made using silane coupling agents, which are hybrid materials possessing a functionality of an organic reactive group

at one end of the molecule and an inorganic alkoxy silane functionality at the opposite end. In this article, the epoxy modified silane was given a chemical structure as follows:

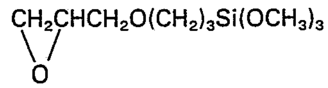

Glass based materials with epoxy functionalities such as those disclosed by Ward Collins are useful in this invention. Other epoxy modified glass based materials using reinforcing agents are also included within the scope of this invention.

Filler materials carrying epoxy moieties on their surface other than glass may also be used, as mentioned above.

The preferred internal mould release agent for the method of this invention is Dow-Corning Q2—7119. This mould release agent is a dimethylsiloxane with organic acid groups manufactured by Dow-Corning Corporation.

Post curing of the elastomers manufactured according to the invention is optional. Post curing will improve some properties such as heat sag. Employment of post curing, however, depends on the desired properties of the end product.

The samples whose properties are shown in Table I are described below. They include Samples G and I, falling within the scope of the invention, and comparative Samples A, B, C, D, E, F and H.

Example

An elastomer with the following forulation has the useful property of releasing from bare steel without the addition of external mould release agents (wax or soap release aids sprayed onto the mould surfaces before each shot).

*B-Component*

62.33 pbw JEFFAMINE T—5000 polyamine
17.7 pbw Diethyltoluenediamine (DETDA)
0.7 pbw Q2—7119 (dimethylsiloxane release agent from Dow-Corning)

*A-Component*

38 pbw THANATE L55—O quasi-prepolymer
19 pbw Isonate 143L Liquid MDI isocyanate

When this formulation is processed in a RIM machine, an elastomer is produced which has the properties given in Table 1, col. A. When enough 0.8 mm milled glass is added to the B-component to produce an elastomer with 10% by weight glass overall, a reinforced RIM elastomer is produced. The properties of a number of such elastomers made with the same basic glass type (0.8 mm milled glass fibers), but with different surface treatments on the glass, are given in Table 1, columns B to I. In Table 1, on the "Glass type" row in columns B and C, reference is made to "739". This is glass with no surface treatment to bind it to the matrix elastomer. Note that the elongation of this reinforced RIM elastomer is similar to the elongation to the unreinforced RIM elastomer (Table 1, col. A). This means that, with or without the "mould release agent", there is poor adhesion between the glass and the elastomer matrix when the glass does not have a surface treatment.

The next two columns (Table 1, cols. D and E) demonstrate the performance using the "737" glass with an amino silane surface treatment. When no "mould release agent" is present (Table 1, col. D), a reduction in elongation is observed when compared to the unreinforced material (Table 1, col. A), and the reinforced material where the glass has no surface treatment (Table 1, cols. B and C). This means that there is a significant polymer-glass bond. When the "internal mould release agent" is added (Table 1, col. E), an increase in elongation is observed, said increase causing the elongation to be comparable to the "no glass" case (Table 1, col. A), and to the glass-containing cases where the glass does not have a surface treatment (Table 1, cols. B and C). Thus, the internal mould release agent interferes with the reinforcement action which addition of glass is supposed to produce. Also note that, for the two glass types in the above discussion, (739 and 737), a drop in flexural modulus and an increase in heat sag is observed when the "internal mould release agent" is added to the formulation.

The last four columns (Table 1, cols. F to I) give the properties of the same elastomer where the glass reinforcement has epoxide moieties in the surface treatment. These epoxide moieties are reactive towards amines and so polymer-glass adhesion is promoted. Note that, when the "internal mould release agent" is added to formulations containing the P174J—X1 glass (Table 1, cols. F and G) and the P346B—X1 glass (Table 1, cols. H and I), no detrimental effect on the properties is observed. In fact, the elongation is slightly decreased, and the flexural modulus is slightly increased by the addition of the "internal mould release agent". Thus, the incorporation of the epoxide groups on the surface treatment which is applied to the glass has resulted in a composite with excellent properties, with or without an "internal mould release agent".

TABLE I

Glass-Filled (OCF 0.8 mm Milled Glass Fibres) Internal Mould Release Fascia[1]

| Column | A[2] | B[2] | C[2] | D[2] | E[2] | F[2] | G[3] | H[2] | I[3] |
|---|---|---|---|---|---|---|---|---|---|
| Glass type | — | 739 | 739 | 737 | 737 | P174J—X1 | PM4J—X1 | P346B—X1 | P346B—X1 |
| Glass, wt % | 0 | 10 | 10 | 10 | 10 | 10 | 10 | 10 | 10 |
| Sample orientation | par/perp | par/perp | par/perp | par/perp | par/perp | par/perp | par/perp | par/perp | par/perp |
| Mould release agent | Yes | No/No | Yes/Yes | No/No | Yes/Yes | No/No | Yes/Yes | No/No | Yes/Yes |
| Tensile, MPa | 21.4 | 19.3/17.7 | 21.0/17.6 | 17.6/17.1 | 16.5/17.2 | 17.2/17.2 | 17.2/17.2 | 18.6/17.2 | 18.6/17.2 |
| Elongation, % | 240 | 230/230 | 230/210 | 180/190 | 220/220 | 140/180 | 130/180 | 100/170 | 90/150 |
| Tear, N/m | 683 | 630/648 | 648/630 | 718/701 | 595/630 | 701/665 | 762/665 | 841/683 | 788/718 |
| Flex mod, MPa measured at room temperature | 207 | 248/248 | 248/241 | 283/269 | 276/255 | 324/283 | 358/296 | 393/296 | 455/296 |
| 70°C | 165 | 200/207 | 165/193 | 228/214 | 193/200 | 255/234 | 276/234 | 317/248 | 372/234 |
| −29°C | 434 | 538/552 | 490/496 | 552/565 | 545/552 | 614/586 | 724/579 | 745/634 | 848/558 |
| Heat sag, mm 150 mm overhang 1 hr at 121°C | 16 | 14/14 | 18/20 | 14/17 | 16/17 | 9/11 | 10/8 | 6/8 | 7/9 |

[1] 1.05 Isocyanate index, post cured at 121°C for 60 min.
[2] For Comparison.
[3] Sample according to the invention.

GLOSSARY OF TERMS AND MATERIALS

| | |
|---|---|
| ISONATE 143L | Carbodiimide modified liquid MDI; a product of the Upjohn Co. |
| JEFFAMINE T—5000 | Polypropylene oxide triamine of about 5,000 molecular weight; a product of Texaco Chemical Co. |
| DETDA | Diethyltoluene diamine; a product of Ethyl Corp. |
| THANOL SF—5505 | A 5500 molecular weight polyether triol containing approximately 80% primary hydroxyl groups. |
| THANATE L—55—0 | Quasi-prepolymer — a quasi-prepolymer formed by reacting equal weights of ISONATE 143L and THANOL SF—5505; a product of Texaco Chemical Co. |

The words 'ISONATE', 'JEFFAMINE', 'DETDA', 'THANOL' and 'THANATE' are registered trade marks.

**Claims**

1. A RIM process for making an elastomer article by reacting, in a closed mould, an aromatic polyisocyanate with an amine-terminated polyether having an average molecular weight of greater than 1500 and having more than 50% of its active hydrogen in the form of amine hydrogen atoms, and a chain extender, in the presence of a filler and an internal mould release agent, characterized in that the filler has been treated so that it carries epoxy moieties on its surface.

2. A method according to Claim 1 characterized in that the amine-terminated polyether has an average molecular weight of at least 2,500.

3. A method according to Claim 1 or 2 characterized in that the amine terminated polyether has a functionality from 2 to 3.

4. A method according to any one of Claims 1 to 3 characterized in that amine-terminated polyether is an aminated polyoxypropylene triol having an average molecular weight of at least 5,000.

5. A method according to any one of Claims 1 to 4 characterized in that the amine-terminated polyether has an equivalent weight of at least 500.

6. A method according to any preceding Claim characterized in that the epoxy modified filler material is glass based.

**Patentansprüche**

1. Reaktionsspritzguß-Verfahren zur Herstellung von Elastomer-Artikeln durch Umsetzung eines aromatischen Polyisocyanats mit einem amin-endständigen Polyether, der ein durchschnittliches Molekulargewicht von größer als 1500 hat und darin mehr als 50% seines aktiven Wasserstoffs in der Form von Amin-Wasserstoffatomen vorliegen, sowie eines Kettenverlängerers in Gegenwart eines Füllmittels und eines inneren Entformungsmittels in einer geschlossenen Form, dadurch gekennzeichnet, daß das Füllmittel eine Vorbehandlung erfahren hat und dadurch Epoxy-Gruppen auf seiner Oberfläche besitzt.

2. Verfahren nach Anspruch 1, dadurch gekennzeichnet, daß der amin-endständige Polyether ein durchschnittliches Molekulargewicht von mindestens 2.500 hat.

3. Verfahren nach Anspruch 1 oder 2, dadurch gekennzeichnet, daß der amin-endständige Polyether eine Funktionalität von 2 bis 3 hat.

4. Verfahren nach einem der Ansprüche 1 bis 3, dadurch gekennzeichnet, daß der amin-endständige Polyether ein aminiertes Polyoxypropylentriol mit einem Moleulargewicht von mindestens 5.000 ist.

5. Verfahren nach einem der Ansprüche 1 bis 4, dadurch gekennzeichnet, daß der amin-endständige Polyether ein Equivalentgewicht von mindestens 500 hat.

6. Verfahren nach einem der vorhergehenden Ansprüche, dadurch gekennzeichnet, daß das epoxymodifizierte Füllmaterial auf Glasbasis ist.

**Revendications**

1. Procédé RIM pour fabriquer un article d'élastomère en faisant réagir, dans un moule fermé, un polyisocyanate aromatique avec un polyéther à terminaison amine ayant une masse moléculaire supérieure à 1500 et ayant plus de 50% de sang hydrogène actif sous la forme d'atomes d'hydrogène aminé, et un agent d'allongement des chaînes en présence d'une charge et d'un agent de démoulage interne, caractérisé en ce que la charge a été traitée de manière à porter des portions époxydes sur sa surface.

2. Procédé suivant la revendication 1, caractérisé en ce que le polyéther à terminaison amine a une masse moléculaire d'au moins 2500.

3. Procédé suivant les revendications 1 ou 2, caractérisé en ce que le polyéther à terminaison amine a une fonctionnalité de 2 à 3.

4. Procédé suivant l'une quelconque des revendications 1 à 3, caractérisé en ce que le polyéther à terminaison amine est un polyoxypropylène triol aminé ayant une masse moléculaire moyenne d'au moins 5000.

5. Procédé suivant l'une quelconque des revendications 1 à 4, caractérisé en ce que le polyéther à terminaison amine a un poids équivalent d'au moins 500.

6. Procédé suivant l'une quelconque des revendications précédentes, caractérisé en ce que la matière de charge modifiée par les époxydes est à base de verre.